# EUROPÄISCHE PATENTSCHRIFT

(11) **EP 2 431 642 B1**
(45) Veröffentlichungstag und Bekanntmachung des Hinweises auf die Patenterteilung: **26.02.2020**
(21) Anmeldenummer: 11007561.1
(22) Anmeldetag: 16.09.2011
(51) Int. Cl.: F16L 11/11, F16L 11/12, F16L 11/15, F16L 9/00, F16L 9/06, F24D 3/14, B29C 48/09, B29C 48/13

(54) **Rohr zur Leitung eines Fluids**
Tube for conveying a fluid
Tuyau de guidage d'un fluide

(30) Priorität: 16.09.2010 DE 202010012660 U
(43) Veröffentlichungstag der Anmeldung: 21.03.2012
(73) Patentinhaber: Stiebel Eltron GmbH & Co. KG, 37603 Holzminden (DE); Fränkische Industrial Pipes GmbH & Co. KG, 97486 Königsberg (DE)
(72) Erfinder: Fischbach, Nadine, 37269 Eschwege (DE); Hoffmann, Fred, 34260 Kaufungen (DE); Hüge, Carsten, 37287 Wehretal (DE); Schlüter, Silke, 33034 Brakel (DE); Grünig, Lutz, 37603 Holzminden (DE)
(74) Vertreter: Eisenführ Speiser

(56) Entgegenhaltungen:
- EP-A2- 2 019 242
- EP-B1- 2 131 114
- WO-A1-2004/001298
- DE-A1- 1 775 675
- DE-A1- 2 918 058
- DE-A1- 4 122 388
- DE-A1-102008 013 013
- GB-A- 191 227 782
- US-A- 6 024 130
- US-A1- 2007 267 012
- US-A1- 2010 200 100

## Beschreibung

Die Erfindung betrifft ein Rohr zur Leitung eines Fluids, bestehend aus einer Bodenwandung, Seitenanbindungen und einer Deckenwandung.

Derartige Rohre finden in verschiedenen Bereichen Verwendung, beispielsweise als Abwasserrohr oder als Luftführungsrohr in Klima- und Lüftungsanlagen. Im Bereich der Klima- und Lüftungstechnik wird ein solches Rohr vorzugsweise horizontal innerhalb eines Estrichs eines Gebäudes verlegt.

Da bei der Verlegung des Rohrs innerhalb eines Estrichs nur eine geringe Bauhöhe zur Verfügung steht, werden im Stand der Technik Rohre mit einem länglichen Querschnitt verwendet. So zeigt die DE 27 52 622 A1 ein Wellrohr mit einem elliptischen Querschnitt. Daneben werden auch Rohre mit einem ovalen Querschnitt verwendet.

Die EP 2 019 242 A2 zeigt ein Rohr, das einen Querschnitt mit einer sich über die gesamte Breite des Rohres erstreckenden geradlinig verlaufenden Seite aufweist, deren beide Enden durch eine gewölbeartig gekrümmt verlaufende Seite miteinander verbunden sind. Als weiterer Stand der Technik wird hingewiesen auf DE 10 2008 013 013 A1, WO 2004/001293 A1, US 2007/0267012 A1, DE 29 18 058 A1, DE 177565, GB 27 782, sowie US 6 024 130. Die DE 2918058 A1 offenbart ein Rohr für eine Ent- oder Belüftungsleitung mit verschiedenen in Frage kommenden Querschnitten, wobei man statt eckigen Ausführungsformen wiederum an den Ecken mehr oder minder gerundete Ausführungsformen wählen kann.

Aus EP 2 131 114 B1 ist ein Rohr bekannt. Das Dokument offenbart ein Kunststoffrohr zum Weiterleiten eines Fluids für Klima- oder Lüftungsanlagen hervor, das aus einem flexiblen Wellrohr mit einem zu einer Symmetrieebene symmetrisch ausgebildeten Querschnitt besteht. Der Querschnitt wird von einer ebenen Bodenwandung und einer gegenüberliegenden bogenförmig nach außen gewölbten Deckenwandung und dazwischen angeordneten Seitenwandungen begrenzt, wobei der Radius der Krümmung der Deckenwandung mindestens dem 1,5-fachen, aber maximal dem Fünffachen der Höheninnenabmessung entspricht. Die Bodenwandung, die Seitenwandungen und die Deckenwandungen gehen dabei bogenförmig ineinander über.

Als weiteren Stand der Technik wird auch hingewiesen auf US 2010/0200100 A1 sowie DE 41 22 388 A1.

Das Dokument US 2010/0200100 A1 zeigt zwar ein Rohr, dessen Bodenwandung nach innen gekrümmt ist, allerdings ist die dort gezeigte Deckenwandung des Rohrs im Querschnitt weder trapezförmig ausgebildet, noch offenbart das Dokument, dass der Krümmungsradius der Bodenwand in irgendeiner Weise im Verhältnis steht zum Krümmungsradius des ersten Bereichs der Deckenwandung. Den gleichen Offenbarungsinhalt hierzu zeigt auch das Dokument DE 41 22 388 A1.

Aus EP 2 131 114 B1 ist ein Rohr für die Haustechnik zur Leitung eines Fluids bekannt, bei welchem das Rohr aus einer Bodenwandung, Seitenanbindung und einer Deckwandung besteht und wobei die Deckenwandung im Querschnitt trapezförmig ausgebildet ist. Ferner offenbart das Dokument ein Kunststoffrohr zum Weiterleiten eines Fluids für Klima- und Lüftungsanlagen, wobei das Rohr aus einem flexiblen Wellrohr mit einem zu einer Symmetrieebene symmetrisch ausgebildeten Querschnitt besteht. Der Querschnitt wird von einer ebenen Bodenwandung und einer gegenüberliegenden bogenförmig nach außen gewölbten Deckenwandung und dazwischen angeordneten Seitenwandungen begrenzt, wobei der Radius der Krümmung der Deckenwandung mindestens dem 1,5-fachen, aber maximal dem 5-fachen der Höhenabmessung entspricht. Die Bodenwandung, die Seitenwandung und die Deckenwandung gehen dabei bogenförmig ineinander über.

Ausgehend vom Stand der Technik liegt der Erfindung die Aufgabe zugrunde, ein Rohr zur Leitung eines Fluids vorzusehen, das einerseits einen großen Strömungsquerschnitt aufweist, andererseits aber statisch stabil und bei Verlegung innerhalb eines Estrichs gegen Trittbelastungen widerstandsfähig ist. Weiterhin soll ein Rohr vorgesehen werden, das kompakt und stapelbar ist und einfach innerhalb eines Estrichs verlegbar ist.

Außerdem liegt der Erfindung die Aufgabe zugrunde, ein Rohr vorzusehen, das leicht biegbar ist.

Erfindungsgemäß ist die obige Aufgabe durch die Merkmale des Anspruchs 1 gelöst. Vorteilhafte Ausführungen der Erfindung sind in den Unteransprüchen gegeben.

Danach weist die Deckenwandung wenigstens einen ersten Bereich und einen zweiten Bereich auf, wobei die Bereiche miteinander verbunden sind und unterschiedliche Geometrien aufweisen.

Vorzugsweise ist ein solches Rohr in Haustechnikgeräten oder -anlagen, beispielsweise zur Wasserleitung oder als Heizungsrohr für eine Fußboden- oder Wandheizung eingesetzt. In einem weiteren Ausführungsbeispiel ist das Rohr innerhalb eines Haustechnikgerätes zur Leitung eines Fluids verwendet, z.B. zur Verbindung von Komponenten des Gerätes oder zum Anschluss an ein Fluidnetz. In einer bevorzugten Ausführungsform ist das Rohr in einem Durchlauferhitzer oder einem Warmwasserspeicher verwendet, die über ein flexibles Rohr an ein Wassernetz angeschlossen sind. In einer weiteren Ausgestaltung der Erfindung ist das Rohr in einer Wärmepumpe vorzugsweise zur Fluidleitung, insbesondere von Kältemittel, Wasser oder einem anderen Wärmeträgermedium verwendet, z.B. für den Anschluss an ein Heizungs- oder Brauchwassersystem. In einer weiteren bevorzugten Ausführungsform der Erfindung ist das Rohr innerhalb einer Solaranlage, insbesondere für die Anschlüsse und Verbindung von Kollektoren oder die Leitung eines Wärmeträgermediums verwendet. Vorzugsweise ist das Rohr für die Luftführung in einer Klima- oder Lüftungsanlage verwendet. Bei der Verwendung des Rohres bei einer Klima- oder Lüftungsanlage wird das Rohr vorzugsweise innerhalb eines Estrichs verlegt.

In einer bevorzugten Ausgestaltung der Erfindung beträgt die Breite des Rohres ca. 100 bis 150 mm, insbesondere ca. 130 bis 140 mm, insbesondere 132,8 mm.

Die Höhe des Rohres beträgt vorzugsweise ca. 40 bis 60 mm, insbesondere ca. 50 bis 55 mm, insbesondere 52 mm.

In einer besonders vorteilhaften Ausgestaltung der Erfindung beträgt die Breite des Rohres 132,8 mm und die Höhe 52 mm.

Vorzugsweise besteht das Rohr aus einem Wellrohr mit Wellenbergen und Wellentälern. Im Inneren des Rohres ist vorzugsweise ein Innenschlauch mit einer ebenen, glatten Innenfläche angeordnet, der mit den Wellentälern verbunden ist.

Die Wellenberge weisen dabei vorzugsweise eine Breite von ca. 2 bis 6 mm, insbesondere ca. 3 bis 4 mm, insbesondere ca. 3,4 mm auf.

In einer bevorzugten Ausführungsform sind die Wellenberge in einem Abstand von ca. 4 bis 8 mm, insbesondere ca. 5 bis 6 mm, insbesondere ca. 5,7 mm, gemessen am Scheitelpunkt, voneinander angeordnet.

Die Höhe der Wellenberge beträgt bevorzugt ca. 3 bis 6 mm, insbesondere ca. 4 bis 5 mm, vorzugsweise ca. 4,5 mm.

In einer bevorzugten Ausgestaltung der Erfindung beträgt der Abstand der Wellenberge ca. 5,7 mm, die Breite der Wellenberge ca. 3,4 mm und die Höhe der Wellenberge ca. 4,5 mm.

Vorzugsweise besteht das Rohr sowie der Innenschlauch aus einem thermoplastischen Kunststoff, der extrusionsfähig ist, vorzugsweise aus Polyethylen oder Polypropylen.

In einer bevorzugten Ausführungsform besteht das Außenrohr aus Polyethylen mit einer hohen Dichte mit der technischen Bezeichnung PE-HD und das Innenrohr aus Polyethylen mit einer niedrigen Dichte mit der technischen Bezeichnung PE-LD.

In einem weiteren bevorzugten Ausführungsbeispiel besteht das Außenrohr aus PE-HD und das Innenrohr aus Ethylenvinylacetat mit der technischen Bezeichnung EVA.

In einer weiteren vorteilhaften Ausführungsform besteht das Außenrohr aus Polyethylen, welches eine mittlere Dichte aufweist, mit der technischen Bezeichnung PE-MD und das Innenrohr aus PE-LD.

Nach einem weiteren Ausführungsbeispiel besteht das Außenrohr aus PE-HD und das Innenrohr aus PE-MD.

In einer weiteren Ausgestaltung der Erfindung besteht das Außenrohr aus PE-MD und das Innenrohr aus EVA.

In einem weiteren Ausführungsbeispiel bestehen sowohl das Außenrohr als auch das Innenrohr aus PE-HD oder aus PE-MD.

Gemäß einer weiteren Ausgestaltung besteht das Außenrohr aus PE-LD und das Innenrohr aus PE-LD oder EVA.

In einem weiteren Ausführungsbeispiel besteht das Außenrohr aus Polyproplylen mit der technischen Bezeichnung PP und das Innenrohr aus PE-LD, PP oder EVA.

Vorzugsweise weist das PE-HD eine Dichte von ca. 940-970 kg/m³, das PE-MD von ca. 930-940 kg/m³, das PE-LD von ca. 915-930 kg/m³, das PP von ca. 900-915 kg/m³ und das EVA von ca. 940 kg/m³ auf.

Durch die Kombination dieser Materialien ist eine gute Biegbarkeit bei gleichzeitiger Trittfestigkeit erreicht.

Vorzugsweise weist das PE-HD einen Schmelzpunkt von 135°C, das PE-MD von 125°C, das PE-LD von 110°C, das PP von 160°C und das EVA von 105°C auf.

Bei der Kombination unterschiedlicher Materialien unterscheiden sich die Schmelzpunkte der Materialien vorzugsweise um maximal ca. 50 °C, vorzugsweise um 0°C bis ca. 30°C. Hierdurch ist erreicht, dass sich Außenrohr und Innenrohr gut miteinander verbinden und sich das Innenrohr zu einem späteren Zeitpunkt nicht wieder ablöst.

In einem weiteren Ausführungsbeispiel besteht das Rohr aus einem Metallwellrohr, vorzugsweise aus Edelstahl, Kupfer, Aluminium oder Messing, in das ein Innenrohr aus einem thermoplastischen extrusionsfähigen Kunststoff oder einer Metallfolie, beispielsweise aus Aluminium oder Edelstahl, eingelegt, insbesondere eingeklebt oder eingeschweißt ist.

In einem Ausführungsbeispiel ist die Deckenwandung bogenförmig gekrümmt, wobei die Geometrien insofern unterschiedlich sind, als der erste Bereich und der zweite Bereich unterschiedliche Krümmungsradien aufweisen. Hierdurch erhält das Rohr einen großen Strömungsquerschnitt, bleibt aber gegen Trittbelastungen widerstandsfähig. Vorzugsweise ist der Krümmungsradius des ersten Bereichs möglichst groß und der Krümmungsradius des zweiten Bereichs möglichst klein gewählt. Hierdurch wird die bei Trittbelastung auf das Rohr wirkende Kraft in Richtung der Seitenanbindungen abgeleitet, wodurch das Rohr nicht einknickt.

Erfindungsgemäß entspricht der erste Krümmungsradius des ersten Bereichs mindestens dem 5,5-fach der Höheninnenabmessung des Rohres und der zweite Krümmungsradius des zweiten Bereichs höchstens dem 1,4-fachen der Höheninnenabmessung. Hierdurch erhält der Querschnitt der Deckenwandung eine weitgehend trapezförmige Form. In einem weiteren aber nicht zur Erfindung gehörigen Ausführungsbeispiel geht der erste Krümmungsradius gegen Unendlich, so dass der erste Bereich nahezu eben ausgeführt ist. Eine weitere aber nicht zur Erfindung gehörige Ausführungsform stellt ein negativer Krümmungsradius, also eine Krümmung nach innen dar, wodurch die Stapelbarkeit des Rohres verbessert ist.

Erfindungsgemäß schließt sich dem zweiten Bereich der Deckenwandung ein dritter Bereich an, der einen dritten Krümmungsradius aufweist. Beim Verlegen des Rohres innerhalb eines Estrichs ist diese Form besonders vorteilhaft, da zwischen dem Rohr und einer beidseitig neben dem Rohr anzuordnenden Wärmedämmung ein Hohlraum entsteht und dieser Hohlraum durch den vorgeschlagenen Querschnitt sehr klein gehalten ist.

In einem weiteren aber nicht zur Erfindung gehörigen Ausführungsbeispiel weisen der erste Bereich und der zweite Bereich insofern unterschiedliche Geometrien auf, als erste Bereich und der zweite Bereich aus Geraden unterschiedlicher Neigung gebildet sind. Die Deckenwand erhält dadurch einen dachförmigen Querschnitt. Vorteilhafte Ausgestaltungen der Erfindung sind beispielsweise eine Satteldachform, eine Pultdachform oder eine Walmdachform.

In einer weiteren aber nicht zur Erfindung gehörigen Ausgestaltung der Erfindung sind die unterschiedlichen Geometrien durch unterschiedliche Formen gebildet. Beispielsweise ist der erste Bereich gekrümmt und der zweite Bereich eben oder umgekehrt.

In einer weiteren aber nicht zur Erfindung gehörigen sind der erste Bereich und der zweite Bereich durch unterschiedliche Parabeln gebildet.

Vorzugsweise weist die Deckenwandung im ersten Bereich und im zweiten Bereich unterschiedliche Wandstärken auf. Bevorzugt ist dem ersten Bereich die Höhe der Wandung größer ausgebildet, wodurch das Rohr eine zusätzliche Stabilität erhält. Vorzugsweise ist die Höhe der Wandung im ersten Bereich um den Faktor 1,1 bis 5,0 größer als im zweiten Bereich, insbesondere um den Faktor 1,5 bis 3,0. In einer weiteren Ausgestaltung der Erfindung ist die Höhe der Wandung in einem dritten Bereich, im Bereich der Seitenanbindungen und/oder im Bereich der Bodenwandung kleiner als im zweiten Bereich. Vorzugsweise ist die Höhe dort um den Faktor 1,1 bis 5,0, insbesondere um den Faktor 1,5 bis 3,0 kleiner als in der zweiten Zone. Dies hat den Vorteil, dass das Rohr durch die Verdickung im ersten Bereich zwar stabil ausgeführt ist, gleichzeitig jedoch der Strömungsquerschnitt nicht nennenswert verringert ist.

Vorzugsweise ist das Außenrohr im Bereich der Wellentäler und Wellenberge unterschiedlich dick ausgebildet, um die Flexibilität des Rohres zu erhöhen, gleichzeitig aber die Trittfestigkeit beizubehalten.

Die Wandstärke variiert dabei vorzugsweise zwischen ca. 0,2 und 1,0 mm, insbesondere ca. 0,5 mm bis 0,9 mm, vorzugsweise ca. 0,6 und 0,85 mm, wobei die dünnste Stelle im Bereich des Wellenberges und die dickste Stelle im Bereich des Wellentales ausgebildet ist.

Die Wandstärke des Innenrohres beträgt vorzugsweise ca. 0,1 bis 0,5 mm, insbesondere ca. 0,1 bis 0,2 mm, um die Flexibilität des Rohres zu erhöhen.

Erfindungsgemäß weist die Bodenwandung einen vierten Krümmungsradius auf. Erfindungsgemäß ist die Bodenwandung leicht nach innen gekrümmt. Durch diese leichte Krümmung liegt das Rohr beim Verlegen innerhalb eines Estrichs nicht vollflächig auf, sondern es hat lediglich zwei Auflagepunkte bzw. -linien. Dadurch liegt es sehr stabil auf dem Estrich auf, da es durch diese Ausführungsform geeignet ist, etwaige Unebenheiten im Estrich auszugleichen. Durch die nur leichte Krümmung ist dabei der Strömungsquerschnitt des Rohres 1 gleichzeitig nicht nennenswert verringert. Bevorzugt ist das Rohr flexibel, so dass es flexibel verlegbar ist und zusätzlich Unebenheiten im Estrich ausgleicht.

In einer weiteren bevorzugten Ausgestaltung der Erfindung weist die Deckenwandung eine Vielzahl von Bereichen mit unterschiedlichen Krümmungsradien auf. Die Krümmungsradien ändern sich konstant und führen so zu einer krümmungsstetigen Krümmung der Deckenwandung. Vorzugsweise weist auch die Seitenwandung eine Vielzahl von Bereichen mit unterschiedlichen Krümmungsradien auf, so dass von der Bodenwandung bis zur Deckenwandung und innerhalb der Deckenwandung ein krümmungsstetiger Verlauf gegeben ist.

Erfindungsgemäß ist die Deckenwandung mit der Bodenwandung über Seitenanbindungen verbunden. In einem Ausführungsbeispiel sind die Seitenanbindungen durch einen weiteren Radius gebildet, um einen großen Strömungsquerschnitt zu erzeugen. In einer weiteren bevorzugten Ausgestaltung der Erfindung sind die Seitenanbindungen durch eine Wandung gebildet, die weitgehend gerade ausgebildet ist, wodurch eine gute Stapelbarkeit des Rohres erreicht ist.

Vorzugsweise weist das Rohr einen Außenumfang von ca. 200 mm ns 400 mm, insbesondere ca. 300 bis 350 mm, vorzugsweise 315 mm, und eine Querschnittsfläche bezogen auf den Außenumfang von ca. 5000 bis 7000 mm, insbesondere ca. 5500 bis 6000 mm², vorzugsweise 5750 mm², auf.

In einer weiteren bevorzugten Ausgestaltung der Erfindung weist das Rohr einen Innenumfang von ca. 200 bis 400 mm, insbesondere ca. 250 bis 300 mm, vorzugsweise 278 mm, und eine Querschnittsfläche bezogen auf den Innenumfang von ca. 3000 bis 5000 mm, insbesondere ca. 3800 bis 4200 mm², vorzugsweise 4011 mm², auf. Die Querschnittsfläche bezogen auf den Innendurchmesser entspricht dabei der durchströmbaren Fläche.

Das spezifische Gewicht des Innenrohrs beträgt vorzugsweise ca. 20 - 100 g/m, das des Außenrohrs vorzugsweise ca. 400 - 600 g/m.

Vorzugsweise wird das Rohr im Wege des Extrusionsverfahrens hergestellt. Dabei wird Kunststoff geschmolzen und sodann unter Druck durch eine speziell geformte Düse gepresst, wodurch es eine spezifische Form erhält. Anschließend kühlt das Rohr ab und behält dabei seine Form.

In einer bevorzugten Ausgestaltung der Erfindung wird das abkühlende Rohr mit Wasser besprüht. Der abkühlende Kunststoff kristallisiert nach der Herstellung noch ca. 24 Stunden nach. Eine Deformation während dieser Zeit ist irreversibel, da der Kunststoff immer wieder die Form annimmt, die er während der Abkühl- und Nachkristallisationsphase hatte. Durch das schnelle Abkühlen des Rohres durch Besprühen mit Wassersprühnebel wird der zu dem Zeitpunkt existierende geometrische Zustand erhalten und die weitere Schwindung durch die Nachkristallisation ist weniger schädlich. Durch diese Maßnahme ist die Trittfestigkeit des Rohres verbessert.

In der Zeichnung zeigen
- Figur 1: einen Rohrquerschnitt in einem Ausführungsbeispiel (nicht zur Erfindung gehörig)
- Figur 2: einen Rohrquerschnitt gemäß einem erfindungsgemäßen Ausführungsbeispiel
- Figur 3: einen Rohrquerschnitt in einem weiteren Ausführungsbeispiel
- Figur 4: einen Rohrquerschnitt in einem weiteren erfindungsgemäßen Ausführungsbeispiel
- Figur 5: verschiedene Rohrquerschnitte mit unterschiedlichen Geometrien (nicht zur Erfindung gehörig)
- Figur 6: einen Rohrquerschnitt mit unterschiedlichen Wanddicken
- Figur 7: einen Rohrquerschnitt in einem weiteren Ausführungsbeispiel (nicht zur Erfindung gehörig)
- Figur 8: eine Anordnung von Rohren in einem Ausführungsbeispiel (nicht zur Erfindung gehörig)
- Figur 9: einen Ausschnitt des Rohres in einem Ausführungsbeispiel

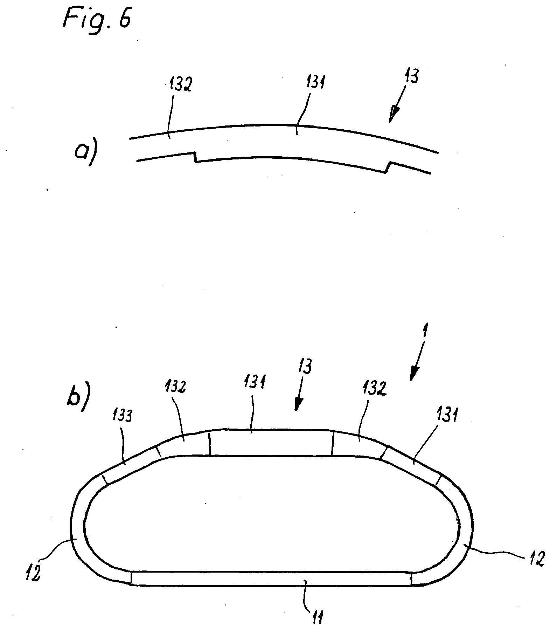

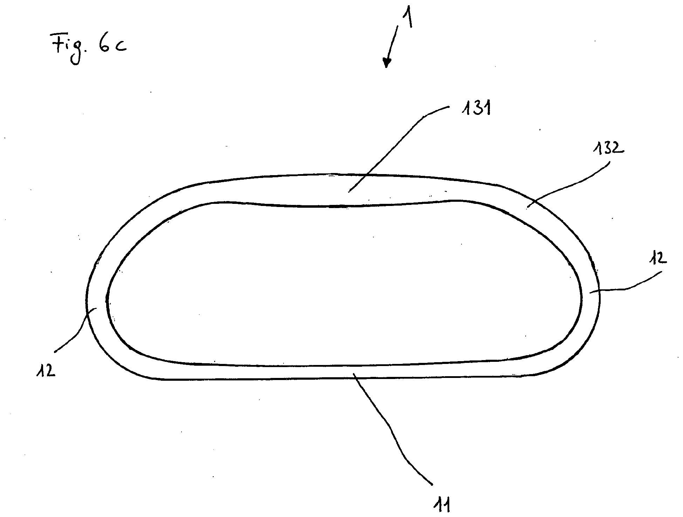

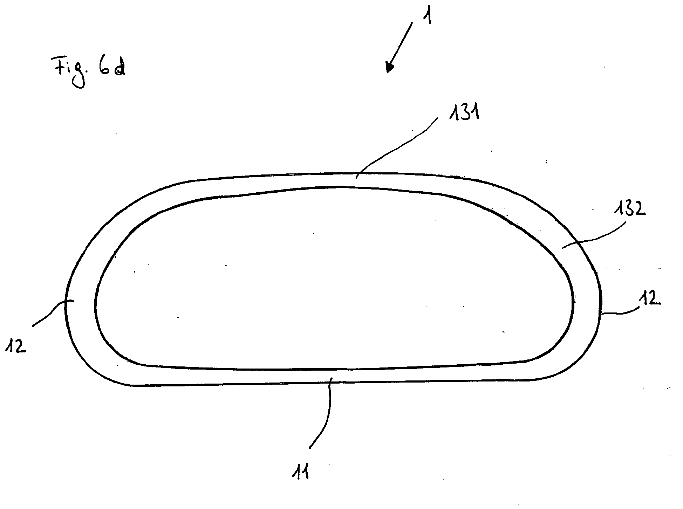

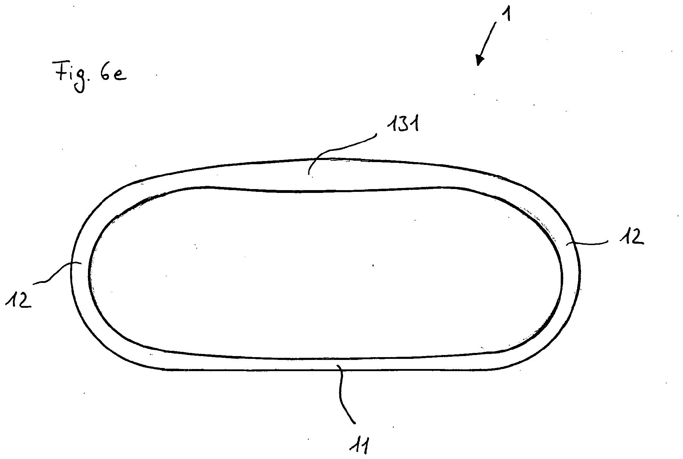

In der Beschreibung und den Figuren, z.B. in Fig. 6b, 6c, 6d und 6e, sind auch Ausführungsformen angegeben, die nicht in den Ansprüchen erfasst sind. Hierbei handelt es sich nicht um Ausführungsformen der Erfindung, sondern um Aspekte, die das Verständnis der Erfindung erleichtern.

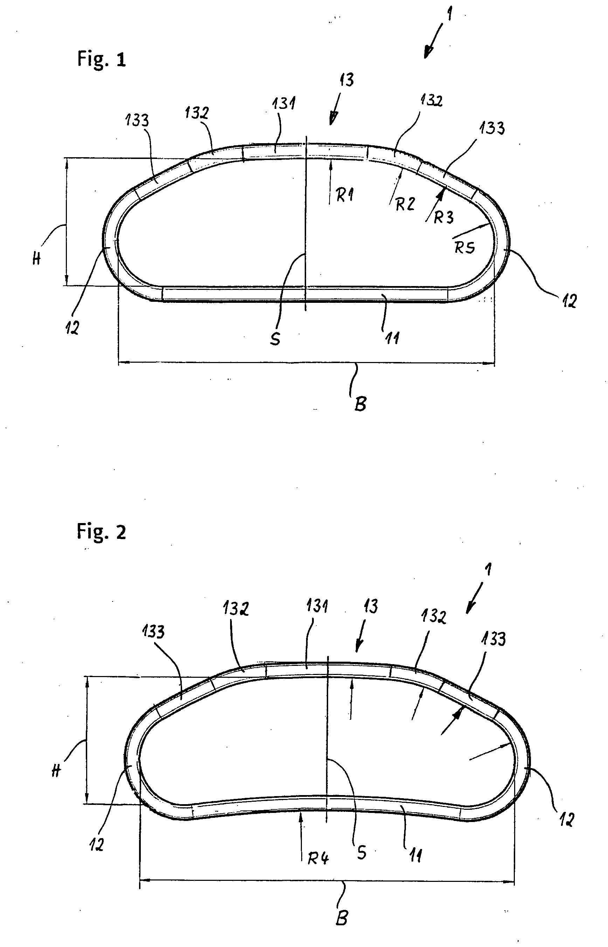

In Fig. 1 ist der Querschnitt eines Rohres 1 in einem Ausführungsbeispiel gezeigt. Das Rohr 1 weist einen zu einer Symmetrieebene S symmetrisch ausgebildeten Querschnitt auf. Die Breiteninnenabmessung B des Rohres 1 ist dabei größer als die Höheninnenabmessung H. Das Rohr 1 weist eine Bodenwandung 11, zwei Seitenwandungen 12 und eine Deckenwandung 13 auf. Die Deckenwandung 13 weist einen ersten Bereich 131 und einen zweiten Bereich 132 auf. Der erste Bereich 131 und der zweite Bereich 132 sind miteinander verbunden und weisen unterschiedliche Geometrien auf. In diesem Ausführungsbeispiel sind die Geometrien insofern unterschiedlich, als der erste Bereich 131 einen im Verhältnis zur Höheninnenabmessung H des Rohres 1 vergleichsweise großen Krümmungsradius R1 und der zweite Bereich 132 einen im Verhältnis zur Höheninnenabmessung H des Rohres 1 vergleichsweise kleinen Krümmungsradius R2 aufweist. An den zweiten Bereich 132 schließt sich ein dritter Bereich 133 an, der mit der Seitenwandung 12 verbunden ist und einen Krümmungsradius R3 aufweist, der in etwa dem Krümmungsradius R1 des ersten Bereiches 131 entspricht. Hierdurch entsteht ein weitgehend trapezförmiger Querschnitt der Deckenwandung 13. In in Fig. 1 gezeigtem Ausführungsbeispiel betragen der erste Krümmungsradius R1 und der dritte Krümmungsradius R3 in etwa das 7-fache der Höheninnenabmessung H des Rohres 1. Der Krümmungsradius R2 entspricht in etwa der Höheninnenabmessung H des Rohres 1. Diese Maße sind jedoch lediglich beispielhaft zu sehen. So sind andere Krümmungsradien oder eine gerade Ausführung des ersten Bereichs 131 und/oder des dritten Bereich 133 ohne Krümmungsradien R1, R3 ebenfalls von der Erfindung umfasst. Die weitgehend trapezförmige Ausführung des Querschnitts der Deckenwandung 13 unterstützt die statische Stabilität des Rohres 1. Die Seitenwandung 12 weist einen Krümmungsradius R5 auf, was zu einem guten Strömungsquerschnitt führt. Jedoch ist auch eine gerade Seitenwand 12 ohne Krümmungsradius R5 von der Erfindung umfasst. Die Bodenwand 11 ist in diesem Ausführungsbeispiel gerade ausgeführt, so dass das Rohr eben auf einen Fußboden oder eine Decke auflegbar ist.

Fig. 2 zeigt den Querschnitt des Rohres 1 aus Fig. 1 in einem weiteren Ausführungsbeispiel. Jedoch weist in diesem Ausführungsbeispiel die Bodenwand 11 ebenfalls einen Krümmungsradius R4 auf, der im Verhältnis zur Höheninnenabmessung H des Rohres 1 relativ groß gewählt ist und hier in etwa den Radien R1, R3 entspricht. Durch die leichte Krümmung der Bodenwandung 11 nach innen hat das Rohr lediglich zwei Auflagepunkte bzw. -linien und liegt somit stabiler auf einem Fußboden auf, da es durch diese Ausführungsform geeignet ist, etwaige Unebenheiten im Estrich auszugleichen. Durch die nur leichte Krümmung ist dabei der Strömungsquerschnitt des Rohres 1 gleichzeitig nicht nennenswert verringert.

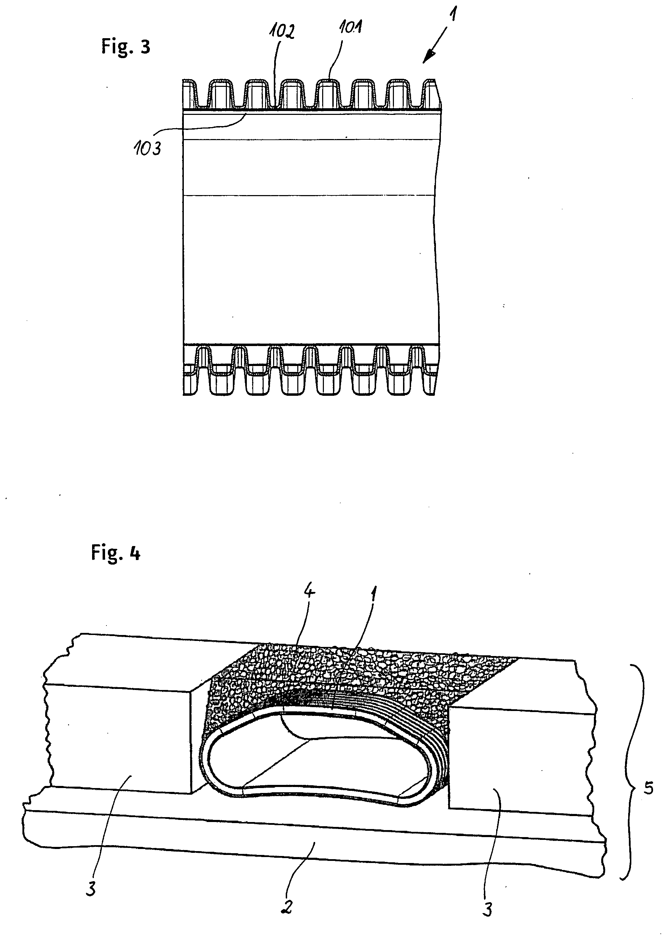

In Fig. 3 ist der Querschnitt des Rohres 1 in einem weiteren Ausführungsbeispiel gezeigt. Das Rohr 1 weist außen Wellenberge 101 und Wellentäler 102 auf. Im Inneren des Rohres 1 ist ein Innenschlauch 103 mit einer ebenen, glatten Innenfläche angeordnet, der mit den Wellentälern 102 verbunden ist. Vorzugsweise besteht das Rohr 1 sowie der Innenschlauch 103 aus einem thermoplastischen Kunststoff, der extrusionsfähig ist, vorzugsweise aus Polyethylen oder Polypropylen. In einem weiteren Ausführungsbeispiel besteht das Rohr 1 aus einem Metallwellrohr, vorzugsweise aus Edelstahl, Kupfer, Aluminium oder Messing, in das ein Innenrohr 103 aus einem thermoplastischen extrusionsfähigen Kunststoff oder einer Metallfolie, beispielsweise aus Aluminium oder Edelstahl, eingelegt, insbesondere eingeklebt oder eingeschweißt ist.

Fig. 4 stellt den Querschnitt des Rohres 1 in einem weiteren Ausführungsbeispiel dar. Hier ist in einem Ausschnitt der Einbau des Rohres 1 in einen Fußboden 5 gezeigt. Das Rohr 1 liegt auf dem Estrich 2 auf. Beidseitig des Rohres 1 ist eine Wärmedämmung 3 angeordnet. Hohlräume zwischen der Wärmedämmung 3 und dem Rohr 1 werden mit einem Material 4 aufgefüllt. Wird das Rohr 1 und die Wärmedämmung 3 sodann mit einer weiteren Estrichschicht überzogen, sorgt das Material 4 dafür, dass sich unter dem Estrich keine Hohlräume bilden und der Estrich nicht reißt. Als Material 4 wird beispielsweise eine Perlite-Schüttung oder ein wärmedämmendes Material verwendet. Durch die trapezförmige Ausgestaltung der Deckenwandung des Rohres 1 ist der entstehende, mit dem Material 4 zu füllende Hohlraum relativ klein gehalten. Weiterhin weist der Hohlraum eine einfache Geometrie auf, so dass das einzulegende Material 4 einfach zuschneidbar ist, indem beispielsweise eine Keilform eingelegt wird. Dies erleichtert den Einbau des Rohres 1 in den Fußboden 5.

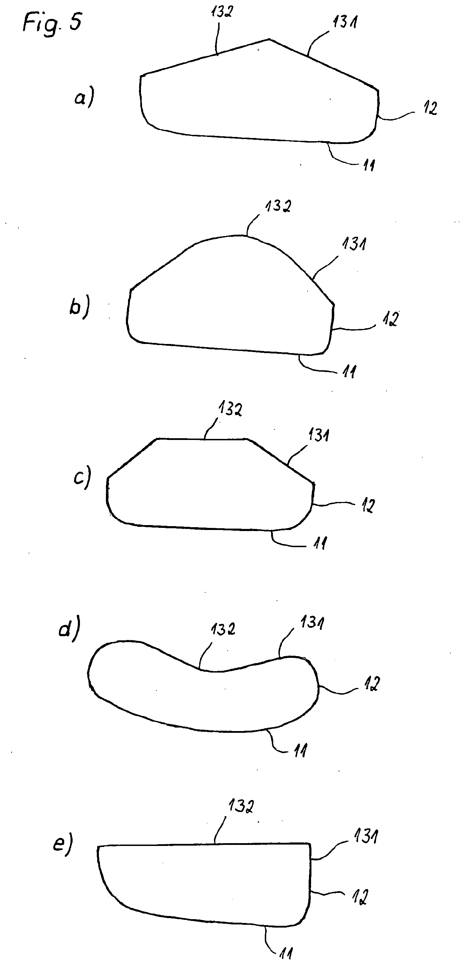

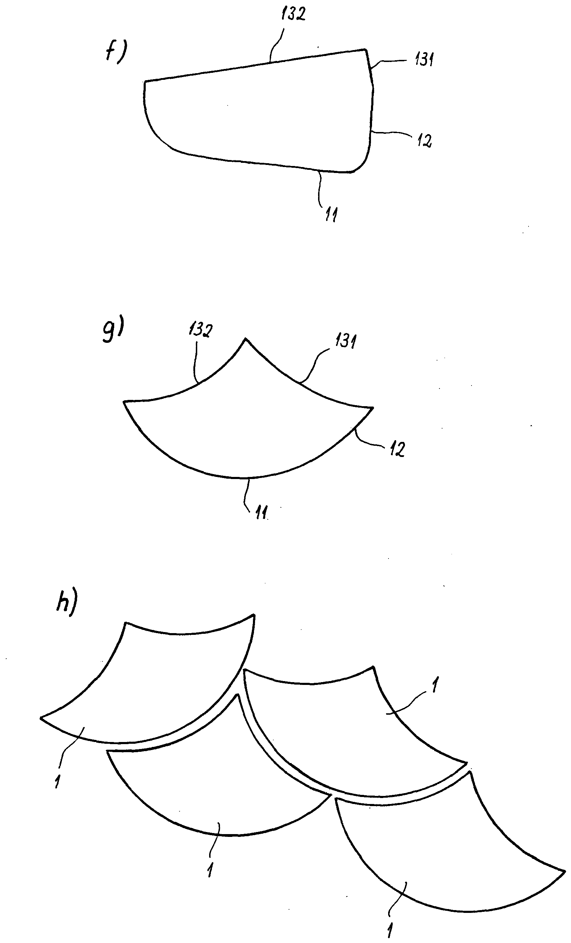

In Fig. 5 sind verschiedene Rohrquerschnitte mit unterschiedlichen Geometrien gezeigt. Die Rohrquerschnitte weisen jeweils eine Bodenwandung 11, Seitenanbindungen 12 und als Deckenwandung einen ersten Bereich 131 und einen zweiten Bereich 132 auf. In Fig. 5a, 5c, 5e und 5f sind der erste Bereich 131 und der zweite Bereich 132 als Geraden ausgebildet und so zueinander geneigt, dass sie einen dachförmigen Querschnitt bilden. Der dachförmige Querschnitt hat in Fig. 5a in etwa die Form eines Satteldaches, in Fig. 5c die Form eines Walmdaches und in Fig. 5e und 5f die Form eines Pultdaches. In Fig. 5b ist der erste Bereich 131 als Gerade ausgebildet und der zweite Bereich 132 ist gekrümmt. In Fig. 5d ist sowohl der erste Bereich 131 als auch der zweite Bereich 132 gekrümmt. Der zweiten Bereich 132 weist dabei einen negativen Krümmungsradius auf, ist also nach innen gekrümmt. In Fig. 5g ist sowohl der erste Bereich 131 als auch der zweite Bereich 132 nach innen gekrümmt. Fig. 5h zeigt das Rohr aus Fig. 5g als gestapelte Anordnung.

Fig. 6 zeigt verschiedene Rohrquerschnitte mit unterschiedlichen Wanddicken. In Fig. 6a ist ein Ausschnitt der Deckenwandung 13 eines Rohres gezeigt. Die Höhe der Wandung im ersten Bereich 131 ist dabei größer als im zweiten Bereich 132. In Fig. 6b ist das Rohr gemäß Fig. 1 gezeigt. Im ersten Bereich 131 und im zweiten Bereich 132 ist hierbei die Wandung verdickt. Fig. 6c zeigt einen Querschnitt des Rohres 1 in einer weiteren Ausführungsform. Im ersten Bereich 131 ist die Höhe der Wandung größer als im zweiten Bereich 132 und im Bereich der Seitenanbindungen 12. Im Bereich der Bodenwandung 11 ist dagegen die Höhe der Wandung kleiner als im zweiten Bereich 132 und im Bereich der Seitenwandungen 12. In Fig. 6d ist sowohl im ersten Bereich 131 als auch im Bereich der Bodenwandung 11 die Wandung ausgedünnt. Im zweiten Bereich 132 und im Bereich der Seitenwandungen ist sie dagegen verdickt. Fig. 6e zeigt ein Rohr 1 mit einem ersten Bereich 131, Seitenanbindungen 12 und einer Bodenwandung 11. Die Höhe der Wandung des Rohres 1 ist im ersten Bereich 131 größer als im Bereich der Seitenanbindungen 12. Im Bereich der Bodenwandung 11 ist die Höhe der Wandung dagegen kleiner als im Bereich der Seitenwandungen 12.

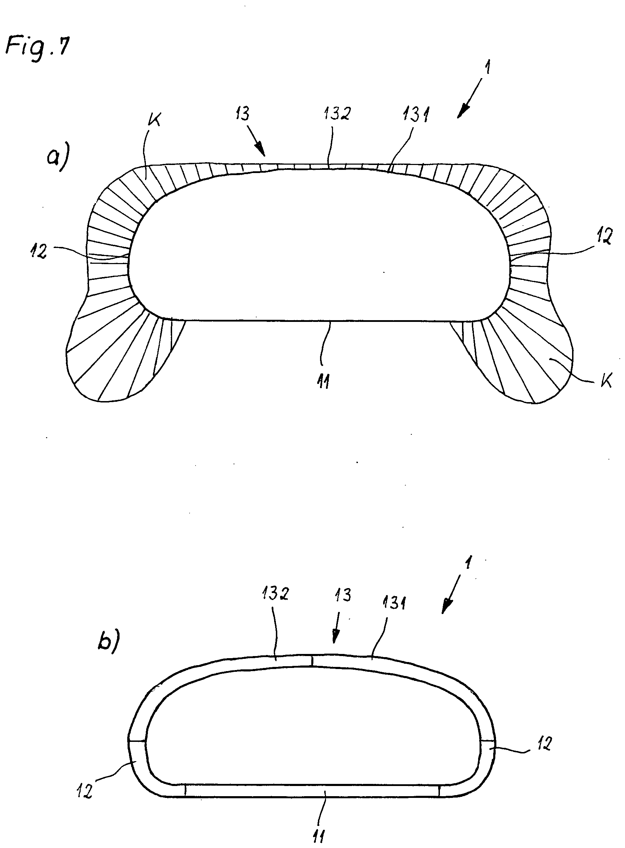

Fig. 7 zeigt den Querschnitt des Rohres 11 in einem weiteren Ausführungsbeispiel mit einer Bodenwandung 11, Seitenanbindungen 12 und einer Deckenwandung 13. Die Krümmung der Deckenwandung 13 verläuft dabei krümmungsstetig. Die Deckenwandung weist eine Vielzahl von Bereichen 131, 132, ... auf, die jeweils unterschiedliche Krümmungsradien aufweisen. Fig. 7b zeigt dabei den Querschnitt des Rohres 1, Fig. 7a den Querschnitt des Rohres 1 in einer vergrößerten Ansicht mit einer Darstellung der Krümmung K, wobei die angegebenen Radien lediglich beispielhaft sind, so dass zwischen den einzelnen Radien eine unbestimmte Anzahl weiterer Radien liegt. Auch die Seitenanbindung 12 weist eine Vielzahl von Bereichen mit unterschiedlichen Krümmungsradien auf, so dass von der Bodenwandung 11 bis zur Deckenwandung 13 und innerhalb der Deckenwandung 13 ein krümmungsstetiger Verlauf gegeben ist.

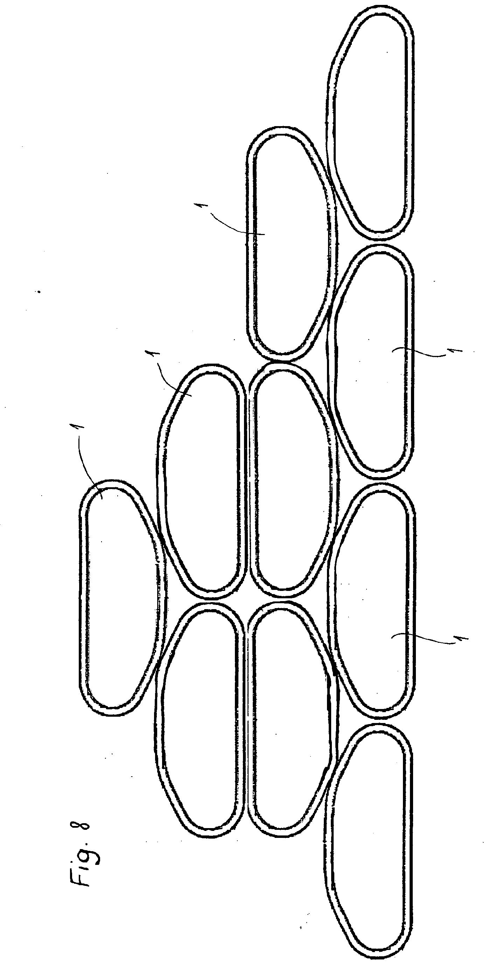

In Fig. 8 sind verschiedene Rohre 1 aus Fig. 1 gezeigt. Hieraus ist die gute Stapelbarkeit von Rohren 1 gemäß Fig. 1 aufgrund des Querschnitts erkennbar.

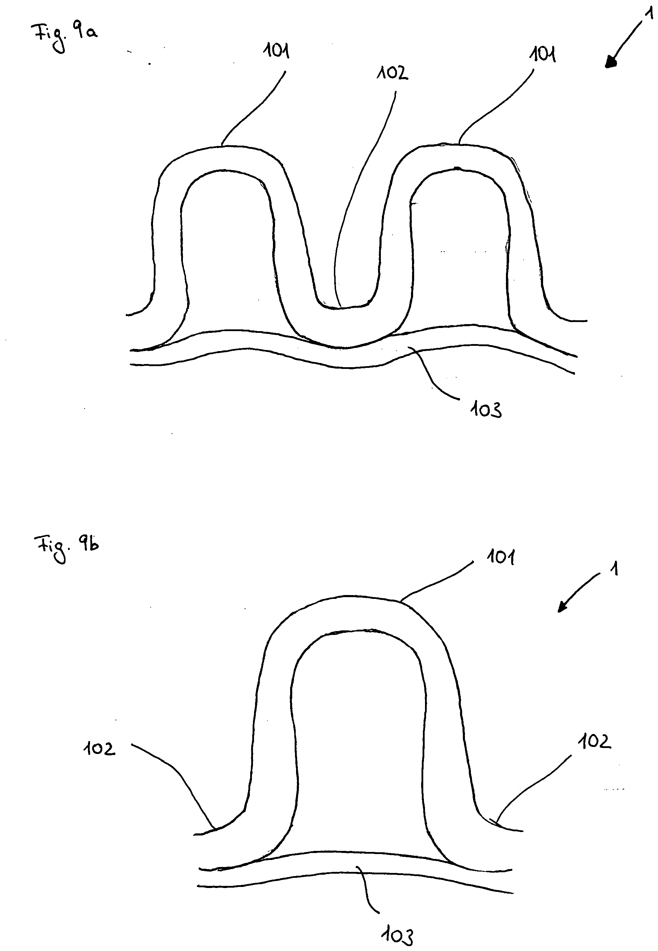

Fig. 9 zeigt einen Ausschnitt des Rohres 1 mit Wellenbergen 101, zwischen denen ein Wellental 102 angeordnet ist. Weiterhin weist das Rohr 1 ein Innenrohr 103 auf. Die Wandstärke der Wellenberge 101 und Wellentäler 102 variiert dabei vorzugsweise zwischen ca. 0,2 und 1,0 mm, insbesondere ca. 0,5 mm bis 0,9 mm, vorzugsweise ca. 0,6 und 0,85 mm, wobei die dünnste Stelle im Bereich des Wellenberges 101 und die dickste Stelle im Bereich des Wellentales 102 ausgebildet ist. Fig. 9a zeigt dabei eine vergrößerte Ansicht zweier Wellenberge 101 und Fig. 9b einen vergrößerte Ansicht eines Wellenbergs 102.

## Patentansprüche

1. Rohr (1) für die Haustechnik zur Leitung eines Fluids, bestehend aus einer Bodenwandung (11), Seitenanbindungen (12) und einer Deckenwandung (13), wobei die Deckenwandung (13) im Querschnitt trapezförmig ausgestaltet ist und wenigstens einen ersten Bereich (131) und einen zweiten Bereich (132) aufweist, wobei die beiden Bereiche (131, 132) miteinander verbunden sind und unterschiedliche Geometrien aufweisen, wobei der erste Bereich (131) der Deckenwandung (13) einen ersten Krümmungsradius (R1) und der zweite Bereich (132) der Deckenwandung (13) einen zweiten Krümmungsradius (R2) aufweist, wobei der erste Krümmungsradius des ersten Bereichs (131) mindestens dem 5,5-fachen, insbesondere dem 7-fachen, der Höheninnenabmessung (H) des Rohres (1) entspricht und der zweite Krümmungsradius (R2) höchstens dem 1,4-fachen, insbesondere dem 1-fachen, der Höheninnenabmessung (H) entspricht, wobei sich dem zweiten Bereich (132) der Deckenwandung (13) ein dritter Bereich (133) anschließt, der mit den Seitenanbindungen (12) verbunden ist, wobei der dritte Bereich (133) einen dritten Krümmungsradius (R3) aufweist, wobei der dritte Krümmungsradius (R3) in etwa dem Krümmungsradius (R1) des ersten Bereiches (131) entspricht, wobei die Bodenwandung (11) nach innen leicht gekrümmt ist und einen vierten Krümmungsradius (R4) aufweist, der in etwa dem ersten und dritten Krümmungsradius (R1, R3) der Deckenwandung (13) entspricht.

2. Rohr (1) gemäß Anspruch 1, **dadurch gekennzeichnet, dass** die Bereiche (131, 132) unterschiedliche Wandstärken aufweisen.

3. Rohr (1) gemäß einem oder mehreren der vorhergehenden Ansprüche 1 oder 2, **dadurch gekennzeichnet, dass** die Deckenwandung (13) aus einer Vielzahl von Bereichen (131, 132) mit unterschiedlichen Krümmungsradien besteht.

## Claims

1. Pipe (1) for building services engineering for conveying a fluid, consisting of a base wall (11), side connection pieces (12) and a top wall (13), wherein the top wall (13) is trapezoidal in cross-section and has at least one first region (131) and one second region (132), wherein the two regions (131, 132) are connected together and have different geometries, wherein the first region (131) of the top wall (13) has a first radius of curvature (R1) and the second region (132) of the top wall (13) has a second radius of curvature (R2), wherein the first radius of curvature of the first region (131) corresponds to at least 5.5 times, in particular 7 times, the inner height dimension (H) of the pipe (1) and the second radius of curvature (R2) corresponds to at most 1.4 times, in particular 1 time, the inner height dimension (H), wherein a third region (133) adjoins the second region (132) of the top wall (13) and is connected to the side connection pieces (12), wherein the third region (133) has a third radius of curvature (R3), wherein the third radius of curvature (R3) corresponds approximately to the radius of curvature (R1) of the first region (131), wherein the base wall (11) is curved slightly inwards and has a fourth radius of curvature (R4), which corresponds approximately to the first and third radius of curvature (R1, R3) of the top wall (13).

2. Pipe (1) according to claim 1, **characterized in that** the regions (131, 132) have different wall thicknesses.

3. Pipe (1) according to one or more of preceding claims 1 or 2, **characterized in that** the top wall (13) consists of a plurality of regions (131, 132) with different radii of curvature.

## Revendications

1. Tuyau (1) pour la technique du bâtiment pour guider un fluide, constitué par une paroi de fond (11), des liaisons latérales (12) et une paroi supérieure (13), la paroi supérieure (13) présentant une section de forme trapézoïdale et au moins une première zone (131) et une deuxième zone (132), les deux zones (131, 132) étant reliées l'une à l'autre et présentant des géométries différentes, la première zone (131) de la paroi supérieure (13) présentant un premier rayon de courbure (R1) et la deuxième zone (132) de la paroi supérieure (13) présentant un deuxième rayon de courbure (R2), le premier rayon de courbure de la première zone (131) correspondant à au moins 5,5 fois, en particulier 7 fois, la dimension interne de la hauteur (H) du tuyau (1) et le deuxième rayon de courbure (R2) correspondant à au moins 1,4 fois, en particulier 1 fois, la dimension interne de la hauteur (H), une troisième zone (133) se raccordant à la deuxième zone (132) de la paroi supérieure (13) et étant reliée aux liaisons latérales (12), la troisième zone (133) présentant un troisième rayon de courbure (R3), le troisième rayon de courbure (R3) correspondant environ au rayon de courbure (R1) de la première zone (131), la paroi de fond (11) étant légèrement courbée vers l'intérieur et présentant un quatrième rayon de courbure (R4) qui correspond environ au premier et au troisième rayon de courbure (R1, R3) de la paroi supérieure (13).

2. Tuyau (1) selon la revendication 1, **caractérisé en ce que** les zones (131, 132) présentent des épaisseurs de paroi différentes.

3. Tuyau (1) selon l'une ou plusieurs des revendications précédentes 1 ou 2, **caractérisé en ce que** la paroi supérieure (13) est constituée par une multitude de zones (131, 132) présentant des rayons de courbure différents.
